# EUROPÄISCHE PATENTSCHRIFT

(11) **EP 1 022 193 B1**
(45) Veröffentlichungstag und Bekanntmachung des Hinweises auf die Patenterteilung: **20.12.2006**
(21) Anmeldenummer: 99119102.4
(22) Anmeldetag: 04.10.1999
(51) Int. Cl.: B60R 16/00, B60Q 1/14

(54) **Lenkstockschalter**
Lever switch for steering shaft
Commutateur à levier de colonne de direction

(30) Priorität: 23.01.1999 DE 19902631
(43) Veröffentlichungstag der Anmeldung: 26.07.2000
(73) Patentinhaber: Valeo Schalter und Sensoren GmbH, 74321 Bietigheim-Bissingen (DE)
(72) Erfinder: Klein, Rudolf, 74348 Lauffen a.N. (DE); Engelhardt, Martin, 74246 Eberstadt (DE)
(74) Vertreter: Dreiss, Fuhlendorf, Steimle & Becker

(56) Entgegenhaltungen:
- DE-A- 19 540 803
- DE-U- 8 904 556
- DE-U- 29 511 154

## Beschreibung

Die Erfindung betrifft einen Lenkstockschalter mit einem Lenkstockschalterhebel und einem Schaltergehäuse, gemäß den Merkmalen des Oberbegriffs des Anspruches 1.

Derartige Lenkstockschalter sind z.B. als Blinkerschalter, als Scheibenwischerschalter oder dergleichen bekannt. Diese Schalter besitzen jeweils einen Schalterhebel, über welchen der Schalter betätigt wird. Zum Betätigen wird der Schalter aus einer Null-Position in eine Schaltposition ausgelenkt, wobei es bekannt ist, dass der Schalter mehr als eine Schaltposition besitzen kann und insbesondere bei Blinkerhebeln die Schaltpositionen beidseits der Null-Postition liegen können. Derartige Lenkstockschalterhebel zeigen jedoch bei der Rückstellung aus der gerasteten Schaltposition, was entweder von Hand oder auch automatisch, z.B. durch die vom Lenkrad ausgelöste Rückstellung erfolgen kann, ein mehr oder weniger starkes Überschwingen über die Null-Position hinaus. Dies führt dazu, dass eventuell bei Blinkerschalterhebeln ein kurzer elektrischer Blinkimpuls auf der anderen Seite erzeugt wird. In schwerwiegenden Fällen kann der Lenkstockschalterhebel sogar mechanisch auf der Gegenseite einrasten, was zum Dauerblinken führt. Häufig ist jedoch ein abklingendes Pendeln um die Null-Position zu verzeichnen, wodurch ein Schnarrgeräusch entsteht. Insbesondere bei einer Laststromschaltung ist ein erhöhter elektrischer Kontaktverschleiß durch Funkenbildung bei kurzen Schaltvorgängen zu verzeichnen.

Diese Phänomene werden insbesondere durch das Trägheitsmoment des Lenkstockschalterhebels um dessen Schwenkachse verursacht. Das Rückstellmoment, welches durch die Federkraft im Schaltstück und durch den Abgleitwinkel der Rastung erzeugt wird, kann jedoch nicht beliebig verringert werden, da ansonsten eine zuverlässige Rückführung des Lenkstockschalterhebels in die Null-Position nicht gewährleistet ist. Außerdem variiert herstellungsbedingt und zeitlich bedingt die Reibung im gesamten System, so dass bereits aus diesem Grund ein bestimmtes Rückstellmoment nicht unterschritten werden darf. Insbesondere bei langen und schweren Lenkstockschalterhebeln, bei sehr großen Rückstellkräften und bei geringen Reibungen neigt der Lenkstockschalterhebel zum Überschwingen.

Aus der gattungsgemäßen DE-A-195 40 803 ist ein Lenkstockschalter bekannt, bei dem die Zapfen der Schwenkachse des Schalterhebels in ein mit Flüssigkeit oder Fett gedämpftes Lager eingreifen und in diesem Lager gebremst werden. Aufgrund der kurzen Hebellängen innerhalb des Bremssystems sind die Brems- und somit die Dämpfungskräfte gering, so daß ein Überschwingen möglich ist.

Der Erfindung liegt daher die Aufgabe zugrunde, einen Lenkstockschalter bereitzustellen, bei dem eine verringerte Gefahr des Überschwingens des Lenkstockschalterhebels über die Null-Position hinaus besteht.

Diese Aufgabe wird mit einem Lenkstockschalter gelöst, der die Merkmale des Anspruches 1 aufweist.

Der am Lenkstockschalterhebel vorgesehene Abschnitt ist ein Kreissektor, der an seinem Kreisbogen als Mitnehmer ausgebildet ist. Dieser Mitnehmer besitzt bei einer Ausführungsform der Erfindung eine Verzahnung, die mit einer Gegenverzahnung des Dämpfungselements kämmt. Auf diese Weise ist eine sichere Übertragung der Bremskräfte vom Dämpfungselement auf den Lenkstockhebel gewährleistet.

Durch das Dämpfungselement wird die Möglichkeit geschaffen, dass trotz einer großen Rückstellkraft, die insbesondere bei langen und schweren Hebeln ein Überschwingen erzeugt, die Rückstellbewegung des Lenkstockschalterhebels gedämpft wird, so dass dieser langsam in die Null-Position bzw. in die benachbarte Schaltposition gelangt. Ein Überschwingen über diese Position hinaus ist daher nicht mehr zu befürchten. Ein weiterer Vorteil der Erfindung wird darin gesehen, dass der Hebel beim Betätigen der Bedienperson den Eindruck eines hochwertigen Schalters vermittelt, der servoartig in seine Stellpositionen übergleitet.

Erfindungsgemäß ist das Dämpfungselement am Schaltergehäuse befestigt und wirkt mit einem am Lenkstockschalterhebel vorgesehenen Abschnitt zusammen. Dies hat den wesentlichen Vorteil, dass das Dämpfungselement selbst nicht ausgelenkt wird, sondern ortsfest am Schaltergehäuse verbleibt, wodurch, abgesehen von den zu dämpfenden Antriebsbewegungen, keine mechanischen Belastungen auf das Dämpfungselement einwirken.

Bei einer Weiterbildung der Erfindung ist vorgesehen, dass das Dämpfungselement ein Rotationsdämpfer ist. Dieser ist mit einem Dämpfungsmedium, insbesondere mit Öl oder Fett, z.B. einem Silikonfett, gefüllt. Durch diesen Rotationsdämpfer, der mit dem kreissektorförmigen Abschnitt, der vom Lenkstockschalterhebel abragt, kämmt, wird die Rückschwenkbewegung des Lenkstockschalterhebels effektiv gedämpft bzw. gebremst. Dieser Rotationsdämpfer kann mit unterschiedlichen Dämpfungsmedien versehen sein, so dass der Rotationsdämpfer auf die Erfordernisse des Lenkstockschalters, insbesondere an die Kraft der Rückstellfedern, die Masse des Lenkstockschalterhebels, die Länge des Lenkstockschalterhebels usw., abgestimmt werden kann.

Das Dämpfungsmedium weist vorzugsweise im Temperaturbereich von -40°C bis +90°C im Wesentlichen gleichbleibende Viskositätseigenschaften auf. Auf diese Weise ist sowohl im Winterbetrieb als auch im Sommerbetrieb sichergestellt, dass die Rückstellbewegung des Lenkstockschalterhebels auf gleiche Weise gebremst bzw. gedämpft wird.

Um den Lenkstockschalter wahlweise mit und ohne gedämpft geführtem Lenkstockschalterhebel ausgestalten zu können, ist das Dämpfungselement ein optionales Anbauteil. Wird das Dämpfungselement weggelassen, dann verhält sich der Lenkstockschalter wie ein herkömmlicher Lenkstockschalter.

Um das Dämpfungselement auf möglichst einfache Art und Weise, insbesondere auch in einer automatischen Produktionslinie am Lenkstockschalter anbringen zu können, ist das Dämpfungselement über eine Schnapp-Rast-Verbindung mit dem Schaltergehäuse verbindbar. Es bedarf keiner Schrauben, Nieten oder sonstigen Verbindungsmitteln, um das Dämpfungselement am Schaltergehäuse zu befestigen.

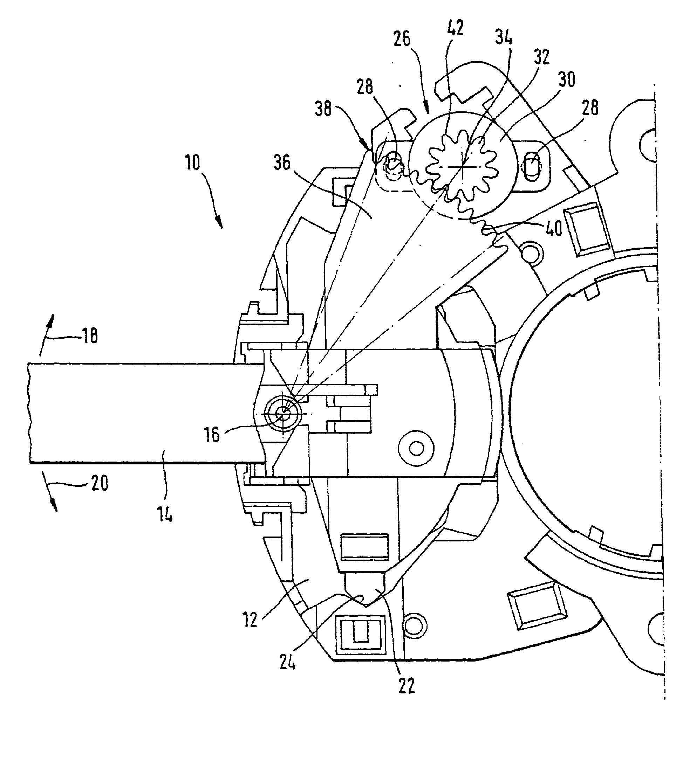

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten und in den Ansprüchen und in der Beschreibung erwähnten Merkmale jeweils einzeln für sich oder in beliebiger Kombination erfindungswesentlich sein.

In der Figur ist ein Teil eines Lenkstockschalters, der insgesamt mit 10 bezeichnet ist, dargestellt. Dieser Lenkstockschalter 10 weist ein Schaltergehäuse 12 sowie einen (teilweise dargestellten) Lenkstockschalterhebel 14 auf, der um eine Schwenkachse 16 am Schaltergehäuse 12 schwenkbar gelagert ist. Der Lenkstockschalterhebel 14 kann in Richtung der Pfeile 18 und 20 verschwenkt werden, was z.B. bei einem Blinkerschalter der Fall ist. Die in der Zeichnung dargestellte gerastete Null-Position wird von einem federbelasteten Zapfen 22 gehalten, der in einer V-förmigen Ausnehmung 24 liegt.

Am Schaltergehäuse 12 ist ein insgesamt mit 26 bezeichnetes Dämpfungselement befestigt, wobei die Befestigung z.B. über Schnapp-Rast-Mittel 28 erfolgen kann. Das Dämpfungselement 26 weist ein Gehäuse 30 auf, welches mit einem Dämpfungsmedium, z.B. einem Spezialfett, gefüllt ist. In diesem Dämpfungsmedium ist ein Rotor um die Achse 34 drehbar gelagert, an welchem ein Zahnrad 32 befestigt ist. Dieses Zahnrad 32 ist ebenfalls um die Achse 34 drehbar gelagert und mit dem Rotor verbunden, wobei die Drehbewegung des Zahnrads 32 vom Rotor, welcher sich im Dämpfungsmedium bewegt, gedämpft bzw. gebremst ist.

Der Lenkstockschalterhebel 14 ist mit einem kreissektorförmigen Abschnitt 36 versehen, welcher seitlich abragt. Dieser kreissektorförmige Abschnitt 36 weist einen Kreisbogen 38 auf, der mit einer Verzahnung 40 versehen ist, welche mit der Gegenverzahnung 42 des Zahnrads 32 kämmt.

Wie aus der Zeichnung ersichtlich, kann das Dämpfungselement 26 in seiner Lage am Schaltergehäuse 12 geringfügig eingestellt werden, so dass dieses eine optimale Position zum Lenkstockschalterhebel 14 bzw. zum Abschnitt 36 besitzt.

Wird nun der Lenkstockschalterhebel 14 aus einer ausgelenkten Lage entweder manuell oder automatisch in die Null-Position zurückbewegt, so wird diese Rückstellbewegung, bei der die Verzahnung 40 mit der Gegenverzahnung 42 kämmt, über das Dämpfungselement 26 gedämpft bzw. gebremst. Ein Überschwingen des Lenkstockschalterhebels 14 über die in der Zeichnung dargestellte Null-Position hinaus wird auf diese Weise verhindert oder zumindest wesentlich verringert.

## Patentansprüche

1. Lenkstockschalter (10) mit einem Lenkstockschalterhebel (14) und einem Schaltergehäuse (12), an welchem der Lenkstockschalterhebel (14) schwenkbar zwischen einer Null-Position und einer oder mehreren Schaltpositionen gelagert ist, wobei ein Dämpfungselement (26) vorgesehen ist, über welches die Schwenkbewegung des Lenkstockschalterhebels (14) von der einen zur anderen Position gedämpft wird, und wobei das Dämpfungselement (26) am Schaltergehäuse (12) befestigt ist und mit einem am Lenkstockschalterhebel (14) vorgesehenen Abschnitt (36) zusammenwirkt, **dadurch gekennzeichnet, dass** der Abschnitt (36) ein Kreissektor ist, der an seinem Kreisbogen (36) als Mitnehmer ausgebildet ist.

2. Lenkstockschalter nach Anspruch 1, **dadurch gekennzeichnet, dass** der Mitnehmer eine Verzahnung (40) ist und das Dämpfungselement (26) eine Gegenverzahnung (42) aufweist.

3. Lenkstockschalter nach einem der vorhergehenden Ansprüche, **dadurch gekennzeichnet, dass** das Dämpfungselement (26) ein Rotationsdämpfer oder Lineardämpfer ist.

4. Lenkstockschalter nach Anspruch 3, **dadurch gekennzeichnet, dass** der Rotationsdämpfer mit einem Dämpfungsmedium, insbesondere Öl oder Fett, gefüllt ist.

5. Lenkstockschalter nach Anspruch 4, **dadurch gekennzeichnet, dass** das Dämpfungsmedium im Temperaturbereich von -40°C bis +90°C im Wesentlichen gleichbleibende Viskositätseigenschaften aufweist.

6. Lenkstockschalter nach einem der vorhergehenden Ansprüche, **dadurch gekennzeichnet, dass** das Dämpfungselement (26) ein Anbauteil ist.

7. Lenkstockschalter nach einem der vorhergehenden Ansprüche, **dadurch gekennzeichnet, dass** das Dämpfungselement (26) über eine Schnapp-Rast-Verbindung (28) mit dem Schaltergehäuse (12) verbindbar ist.

## Claims

1. A steering column switch (10), having a steering column switch lever (14) and a switch housing (12) on which the steering column switch lever (14) is seated, pivotable between a zero position and one or several switching positions, wherein a buffer element (26) is provided, by means of which the pivot movement of the steering column switch lever (14) from one position to the other is buffered, and wherein the buffer element (26) is fastened on the switch housing (26) and works together with a section (36) provided on the steering column switch lever (14), **characterized in that** the section (36) is a sector of a circle which is embodied as a driver.

2. The steering column switch in accordance with claim 1, **characterized in that** the driver is a tooth arrangement (40) and the buffer element (26) has a counter-tooth arrangement (42).

3. The steering column switch in accordance with one of the preceding claims, **characterized in that** the buffer element (26) is a rotary buffer element or a linear buffer element.

4. The steering column switch in accordance with claim 3, **characterized in that** the rotary buffer element is filled with a buffering medium, in particular oil or grease.

5. The steering column switch in accordance with claim 4, **characterized in that** in the temperature range between -40°C and +90°C the buffering medium has substantially constant viscosity properties.

6. The steering column switch in accordance with one of the preceding claims, **characterized in that** the buffer element (26) is an add-on element.

7. The steering column switch in accordance with one of the preceding claims, **characterized in that** the buffer element (26) can be connected with the switch housing by means of a snap-on locking connection.

## Revendications

1. Commutateur pour colonne de direction (10) comportant un levier de commutateur (14) et un boîtier de commutateur (12), sur lequel le levier de commutateur (14) est monté pivotant entre une position neutre et une ou plusieurs positions de commande, un élément d'amortissement (26) étant prévu en vue d'amortir le mouvement de pivotement du levier de commutateur (14) de l'une des positions vers l'autre, et l'élément d'amortissement (26) étant fixé contre le boîtier de commutateur (12) et coopérant avec une partie (36) prévue sur le levier de commutateur (14), **caractérisé en ce que** la partie (36) est un secteur circulaire qui, sur son arc de cercle (36), est réalisé sous forme d'élément entraîneur.

2. Commutateur pour colonne de direction selon la revendication 1, **caractérisé en ce que** l'élément entraîneur est une denture (40) et l'élément d'amortissement (26) comporte une denture complémentaire (42).

3. Commutateur pour colonne de direction selon l'une quelconque des revendications précédentes, **caractérisé en ce que** l'élément d'amortissement (26) est un amortisseur rotatif ou un amortisseur linéaire.

4. Commutateur pour colonne de direction selon la revendication 3, **caractérisé en ce que** l'amortisseur rotatif est rempli par un produit d'amortissement, en particulier de l'huile ou de la graisse.

5. Commutateur pour colonne de direction selon la revendication 4, **caractérisé en ce que** le produit d'amortissement dans le domaine de température de -40°C à +90°C possède des propriétés de viscosité sensiblement constantes.

6. Commutateur pour colonne de direction selon l'une quelconque des revendications précédentes, **caractérisé en ce que** l'élément d'amortissement (26) est une pièce rapportée.

7. Commutateur pour colonne de direction selon l'une quelconque des revendications précédentes, **caractérisé en ce que** l'élément d'amortissement (26) peut être assemblé au boîtier de commutateur (12) au moyen d'un assemblage par encliquetage (28).
